# EUROPÄISCHE PATENTSCHRIFT

(11) **EP 3 338 598 B1**
(45) Veröffentlichungstag und Bekanntmachung des Hinweises auf die Patenterteilung: **05.08.2020**
(21) Anmeldenummer: 17169946.5
(22) Anmeldetag: 08.05.2017
(51) Int. Cl.: A47J 27/00, A47J 43/07

(54) **KOCHGEFÄSS FÜR EINE KÜCHENMASCHINE, KÜCHENMASCHINE SOWIE VERFAHREN ZUR HERSTELLUNG EINES HEIZELEMENTES**
COOKING VESSEL FOR A KITCHEN MACHINE, KITCHEN MACHINE AND METHOD OF MANUFACTURING A HEATING ELEMENT
RECIPIENT DE CUISSON POUR ROBOT MENAGER, ROBOT MENAGER ET PROCÉDÉ DE FABRICATION D'UN 'ÉLÉMENT CHAUFFANT

(30) Priorität: 23.12.2016 DE 102016125678
(43) Veröffentlichungstag der Anmeldung: 27.06.2018
(73) Patentinhaber: Vorwerk & Co. Interholding GmbH, 42270 Wuppertal (DE)
(72) Erfinder: Kraut-Reinkober, Stefan, 51375 Leverkusen (DE); Tietz, Sebastian, 53121 Bonn (DE); Loth, Jan-Martin, 44799 Bochum (DE)
(74) Vertreter: Vogel, Andreas

(56) Entgegenhaltungen:
- EP-A1- 1 274 333
- EP-A1- 2 237 710
- EP-B1- 1 177 708
- DE-U1- 9 411 507
- DE-U1- 29 710 464
- US-A1- 2011 186 668

## Beschreibung

Die vorliegende Erfindung betrifft ein Kochgefäß für eine Küchenmaschine gemäß dem Oberbegriff des unabhängigen Anspruchs 1, eine Küchenmaschine gemäß dem Oberbegriff des Anspruchs 8, sowie ein Verfahren zur Herstellung eines Heizelementes für ein Kochgefäß.

Zum Erwärmen von Speisen sind diverse Vorrichtungen zur Verwendung in einer Küche bekannt. So sind beispielsweise unterschiedliche Arten von Töpfen bekannt, in denen Speisen dadurch erhitzt werden können, dass der Topf von außen mit Wärme beaufschlagt wird. Um eine solche passive Wärmeleitung an die Speisen zu gewährleisten, sind dabei ferner unterschiedliche Materialien für Töpfe bekannt, wobei derartige Töpfe jedoch im Normalfall nur mit einer externen Wärmequelle, wie beispielsweise einem Herd, funktionieren.

Eine weitere Art von Küchengeräten stellen Küchenmaschinen dar. Küchenmaschinen vereinen im Allgemeinen eine Vielzahl Funktionen zum Zubereiten von Speisen, sodass einem Benutzer das Zubereiten erleichtert wird. Zum Kochen oder Erhitzen von Speisen weisen einige Küchenmaschinen daher eine aktive Heizung auf, durch welche Wärme generiert werden kann. Im Vergleich zu einem herkömmlichen Topf, sind an die Küchenmaschinen jedoch häufig unterschiedliche Anforderungen gestellt. So soll in einer Küchenmaschine zum einen die Erhitzung der Speisen möglichst präzise erfolgen und zum anderen müssen diverse weitere Funktionsweisen und -komponenten innerhalb der Küchenmaschine bei der Auslegung der Heizung berücksichtigt werden. Ein Heizelement für eine Küchenmaschine ist beispielsweise aus der EP 1 274 333 A1 bekannt. Dabei ist ein Heizmittel zur Erwärmung unterhalb einer Platte angeordnet, sodass oberhalb der Platte Speisen erhitzt werden können. Derartige Heizelemente erfüllen bereits verschiedene Anforderungen, die an sie gestellt werden. Für zukünftige Anforderungen, bei denen auch eine Elektronik einer Küchenmaschine eine immer größere Rolle spielt, werden jedoch auch die Anforderungen an die Genauigkeit der Temperaturbeaufschlagung und/oder der Temperaturmessung immer höher, so dass diesbezüglich Optimierungsmöglichkeiten vorhanden sind.

Es ist daher die Aufgabe der vorliegenden Erfindung, voranstehend aus dem Stand der Technik bekannte Nachteile zumindest teilweise zu beheben. Insbesondere ist es die Aufgabe der vorliegenden Erfindung in zumindest einem Bereich einer Küchenmaschine in kostengünstiger und einfacher Art und Weise eine möglichst gleichmäßige Wärmeverteilung und/oder Temperaturmessung zu ermöglichen.

Die voranstehende Aufgabe wird gelöst durch ein Kochgefäß mit den Merkmalen des Anspruchs 1, eine Küchenmaschine mit den Merkmalen des Anspruchs 8, sowie ein Verfahren zur Herstellung eines Heizelementes mit den Merkmalen des unabhängigen Anspruchs 9.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Kochgefäß beschrieben worden sind, selbstverständlich auch in Zusammenhang mit der erfindungsgemäßen Küchenmaschine und dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß weist ein Kochgefäß für eine Küchenmaschine ein Heizelement auf. Das Heizelement weist ferner ein Heizmittel zum Erzeugen von Wärme und einen, insbesondere kreisscheibenartigen, Wärmeübertrager mit einer Wärmeaufnahmeseite und einer Wärmeabgabeseite auf. Dabei dient die Wärmeabgabeseite zum Erhitzen von Lebensmitteln in der Küchenmaschine und an der Wärmeaufnahmeseite ist der Wärmeübertrager durch das Heizmittel erwärmbar. Dabei umfasst der Wärmeübertrager eine Öffnung für ein Rührwerk. Ferner weist der Wärmeübertrager an der Wärmeabgabeseite eine erste Funktionsschicht, insbesondere zur Kontaktierung der Lebensmittel, auf. Weiterhin weist der Wärmeübertrager zumindest bereichsweise eine metallische Wärmeleitschicht auf, die derart mit der ersten Funktionsschicht angeordnet ist, dass die vom Heizmittel erzeugte Wärme von der Wärmeleitschicht flächig an die erste Funktionsschicht übertragbar ist.

Dabei ist die Küchenmaschine vorzugsweise zum semi-automatischen oder automatischen Zubereiten von Speisen geeignet. Insbesondere kann die Küchenmaschine multifunktional ausgebildet sein, sodass durch die Küchenmaschine mehrere Funktionen zum Zubereiten von Speisen ausführbar sein können. So kann durch die Küchenmaschine sowohl ein Erhitzen der Speisen, als auch ein Rühren insbesondere automatisch möglich sein. Ferner kann die Küchenmaschine durch das Heizelement mittels weiterer Aufsätze zum Erhitzen von Wasser ausgebildet sein, sodass ein Dampfgaren oberhalb des Heizelementes möglich ist. Das Heizmittel ist dabei insbesondere aktiv beheizt. So kann das Heizmittel beispielsweise eine Dickschichtheizung, eine Induktionsheizung, eine Fluidheizung mit fluiddurchflossenen Wärmerohren, oder eine Strahlungsheizung mit aktiven Heizleitern umfassen. Der Wärmeübertrager ist ferner dazu ausgebildet, Wärme von dem Heizmittel an Lebensmittel zu übertragen. Dabei kann der Wärmeübertrager gewölbt oder flach ausgeführt sein. So kann der Wärmeübertrager in den Boden eines Kochgefäßes eingepasst sein und/oder den Boden eines Kochgefäßes bilden. Insbesondere können das Kochgefäß und zumindest die erste Funktionsschicht materialeinheitlich ausgebildet sein, so dass eine Verschweißbarkeit begünstigt ist. Somit kann das Kochgefäß Edelstahl aufweisen. Dazu kann der Wärmeübertrager an seiner Außenseite einen insbesondere umlaufenden Rand aufweisen, der vorzugsweise kragenförmig ausgestaltet sein kann. Der Rand des Wärmeübertragers kann dabei dazu dienen, das Heizelement am Kochgefäß der Küchenmaschine zu befestigen.

Vorteilhafterweise kann der Wärmeübertrager scheibenartig ausgeführt sein. Dabei kann der Wärmeübertrager insbesondere über einen Querschnitt homogene Schichtdicken zumindest der ersten Funktionsschicht und der Wärmeleitschicht aufweisen. Insbesondere kann der Wärmeübertrager kreisförmig ausgebildet sein, sodass dieser zumindest im Wesentlichen eine Kreisscheibe bilden kann. Dabei kann der Wärmeübertrager ferner derart ausgestaltet sein, dass der Durchmesser der Wärmeabgabeseite größer ist als die Summe der Schichtdicken der ersten Funktionsschicht und der Wärmeleitschicht, um eine günstige Fertigungsmethode zu ermöglichen und gleichzeitig einen axialen Bauraum zu begrenzen. Zwischen der ersten Funktionsschicht und der Wärmeleitschicht kann ein Zwischenraum mit einem Abstand, insbesondere von bis zu 10 mm, vorgesehen sein, wobei zwischen der ersten Funktionsschicht und der Wärmeleitschicht vorteilhafterweise ein luftgefüllter Raum oder ein Vakuum vorgesehen sein kann. Insbesondere kann der Zwischenraum zwischen der Wärmeleitschicht und der ersten Funktionsschicht mit einer Wärmeleitpaste verfüllt sein, um die Wärmeleitfähigkeit weiter zu verbessern. Weiterhin können die erste Funktionsschicht und die Wärmeleitschicht auch, insbesondere vollflächig, miteinander kontaktierend ausgebildet sein, so dass eine direkte Wärmeleitung ermöglicht ist. Die erste Funktionsschicht hat insbesondere eine zur Wärmeleitschicht unterschiedliche Wärmeleitfähigkeit, wobei die Wärmeleitschicht vorzugsweise eine höhere Wärmeleitfähigkeit hat als die erste Funktionsschicht. Die metallische Wärmeleitschicht ist insbesondere dadurch definiert, dass sie ein Metall aufweist oder vollständig aus Metall besteht.

Die erste Funktionsschicht kann vorzugsweise metallisch sein. Insbesondere kann die erste Funktionsschicht beispielsweise einen Stahl, insbesondere einen Edelstahl, Kunststoff und/oder Glas aufweisen. Dabei kann die erste Funktionsschicht diverse Funktionen erfüllen. So können an der ersten Funktionsschicht die Lebensmittel direkt erhitzbar sein. Zum anderen kann die erste Funktionsschicht dekorativ ausgebildet sein, sodass sich eine Gestaltung des Gefäßbodens des Kochgefäßes der Küchenmaschine ergibt. Weiterhin kann die Oberfläche des Heizelementes an der Wärmeabgabeseite des Wärmeübertragers eine zusätzliche lebensmittelechte Beschichtung aufweisen. Auch ist denkbar, dass zur Aufnahme von Lebensmitteln ein zusätzlicher Zwischenboden oberhalb der ersten Funktionsschicht des Wärmeübertragers am Wärmeübertrager direkt oder beabstandet angeordnet ist. Das erfindungsgemäße Heizelement ist vorzugsweise bodenseitig des Kochgefäßes angeordnet. Insbesondere kann unter einer bodenseitigen Anordnung verstanden werden, dass Lebensmittel von unten erhitzbar sind und/oder das Heizelement sich außerhalb eines Deckels des Kochgefäßes befindet. Dabei kann unter einem Kochgefäß ein Gefäß verstanden werden, in welchem Speisen z.B. bis zur jeweiligen Koch- und/oder Gartemperatur erhitzbar sind. Das Kochgefäß kann daher zur Aufnahme von Flüssigkeiten geeignet sein, wobei das Heizelement vorzugsweise die Unterseite des Kochgefäßes bilden kann.

Die Wärmeleitschicht kann als Festkörper ausgestaltet sein und beispielsweise ein Edelmetall wie Silber und/oder Gold aufweisen. Besonders bevorzugt umfasst ein Wärmeleitmaterial der Wärmeleitschicht Kupfer und/oder Aluminium oder die Wärmeleitschicht besteht aus Kupfer und/oder Aluminium. Diese Materialien sind einfach beschaffbar und weisen gleichzeitig eine gute Wärmeleitfähigkeit auf.

Vorteilhafterweise ergibt sich eine Aufteilung des Wärmeübertragers in Wärmeleit- und Funktionsschicht, sodass vorteilhafte Wärmeleiteigenschaften der Wärmeleitschicht mit anderen vorteilhaften Eigenschaften der ersten Funktionsschicht kombinierbar sind. So kann durch die erste Funktionsschicht eine Schweißbarkeit gegeben sein, eine Reduktion der elektrischen Leitfähigkeit oder dergleichen. Durch die Wärmeleitschicht entsteht gleichzeitig eine zumindest teilweise Umlenkung der Wärme innerhalb des Heizelementes zu Stellen mit lokal hohem Wärmebedarf auf der Wärmeabgabeseite. Somit wird eine gleichmäßige Temperaturverteilung insbesondere in Querrichtung des Heizelementes verbessert. Insbesondere wird die Temperaturverteilung homogenisiert. Ferner kann das Heizmittel durch die verbesserte Temperaturverteilung klein ausgeführt sein, so dass Kosten eingespart werden können und z.B. mehr Bauraum für Sensoren zur Verfügung steht, wodurch erneut eine noch genauere Temperatursteuerung möglich sein kann. Weiterhin kann auch eine dynamische Wärmeverteilung verbessert sein. So können räumlich ungleich verteilte Speisen, insbesondere beim Rühren, am Heizelement beispielsweise lokale Wärmeunterschiede verursachen, weiche durch die verbesserte Wärmeverteilung schneller ausgeglichen werden können. Durch die verbesserte Temperatursteuerung und/oder Temperaturmessung im Heizelement bzw. in einem Bereich am Heizelement ergibt sich die Möglichkeit einen Garpunkt der Lebensmittel genau anzusteuern, so dass die Zubereitungsqualität gesteigert sein kann.

Im Rahmen der Erfindung ist vorgesehen, dass die Wärmeleitschicht zwischen der ersten Funktionsschicht und einer zweiten Funktionsschicht angeordnet ist. Dabei kann die Wärmeleitschicht zwischen der ersten Funktionsschicht und der zweiten Funktionsschicht sandwichartig angeordnet sein. Durch die Verwendung einer zweiten Funktionsschicht auf der der ersten Funktionsschicht gegenüberliegenden Seite der Wärmleitschicht können in dem Wärmeübertrager weitere vorteilhafte Eigenschaften kombiniert werden. So kann eine Verschweißbarkeit des Heizelementes mit dem Kochgefäß der Küchenmaschine weiter verbessert sein, indem diese beidseitig möglich ist. Dadurch kann auch eine Abdichtung der Heizscheibe mit dem Kochgefäß verbessert sein, sodass sich im Zwischenraum der Verbindungsstelle kein Schmutz sammelt. Durch die Verschweißbarkeit und die damit mögliche Abdichtung kann ferner auch die Anforderung an die Toleranz des maximalen Durchmessers des Wärmeübertragers reduziert sein, so dass eine kostengünstige Fertigung weiter begünstigt ist. Durch eine sandwichartige Ausgestaltung des Wärmeübertragers kann eine sichere Verbindung durch eine Verpressung der einzelnen Schichten kostengünstig realisiert werden. Insbesondere kann unter einer sandwichartigen Anordnung verstanden werden, dass die Wärmeleitschicht direkt mit der ersten und mit der zweiten Funktionsschicht kontaktiert. Vorteilhafterweise ist auch eine dritte oder eine weitere Funktionsschicht denkbar, sodass an der Wärmeaufnahmeseite und/oder der Wärmeabgabeseite zunächst zwei Funktionsschichten an der Wärmeleitschicht angeordnet sein können. Dadurch können weitere vorteilhafte Eigenschaften in den Wärmeübertrager integriert sein. Vorzugsweise kann das Verhältnis eines Durchmessers der Wärmeabgabeseite des Wärmeübertragers zu einer Gesamtdicke des Wärmeübertragers mit dem Heizmittel zwischen 10 und 250 liegen. Dabei kann die Gesamtdicke ein maximales Maß des Wärmeübertragers mit dem Heizmittel senkrecht zur Wärmeabgabeseite sein. Ein derartiges Verhältnis von Durchmesser der Wärmeabgabeseite und Gesamtdicke des Wärmeübertragers mit dem Heizmittel des Heizelementes kann den Vorteil mit sich bringen, dass eine Temperatur homogen vom Heizmittel an die Wärmeabgabeseite übertragen wird und gleichzeitig eine kostengünstige Fertigungsmöglichkeit, beispielsweise durch Verwendung von Platten, insbesondere Metallplatten, gegeben ist.

Es ist ferner denkbar, dass bei einem erfindungsgemäßen Kochgefäß die erste und/oder die zweite Funktionsschicht lebensmittelecht ausgebildet ist. Dabei kann die erste und/oder die zweite Funktionsschicht einen Edelstahl aufweisen oder aus einem Edelstahl bestehen. Unter einer lebensmittelechten Ausbildung kann im Rahmen der vorliegenden Erfindung verstanden werden, dass die erste und/oder die zweite Funktionsschicht geschmacksneutral und insbesondere unschädlich für den menschlichen Organismus bei der Einnahme von Essen, welches mit der ersten und/oder der zweiten Funktionsschicht in Kontakt war, ist. Vorzugsweise kann durch die lebensmittelechte Ausbildung ferner gegeben sein, dass sich Lebensmittel bei der Kontaktierung mit der ersten und/oder zweiten Funktionsschicht nicht verfärben. Durch die Nähe zu den Lebensmitteln ist es somit insbesondere vorteilhaft, wenn die erste Funktionsschicht lebensmittelecht ausgebildet ist. Dadurch kann auch ein geringer Einfluss des Materials auf den Geschmack nahezu vollständig oder vollständig verhindert sein. Bei dem Edelstahl kann es sich vorzugsweise um einen zumindest teilweise ferritischen Edelstahl handeln. Dadurch können sich eine kostengünstige Fertigung und gleichzeitig eine ausreichende Festigkeit bei geringer Wärmedehnung ergeben. Somit kann ein direkter Kontakt der Lebensmittel mit der ersten und/oder zweiten Funktionsschicht ermöglicht sein, wobei ein Zwischenboden nicht notwendig sein kann. Dadurch kann die Genauigkeit bei der Temperaturmessung bzw. bei der Temperaturansteuerung des Heizmittels für das Erwärmen der Lebensmittel gesteigert sein. Vorzugsweise können die erste und die zweite Funktionsschicht ferner materialeinheitlich ausgebildet sein. Dies bietet den Vorteil, dass weniger unterschiedliche Materialien verwaltet und beschafft werden müssen, so dass eine kostengünstige Herstellung des Heizelementes verbessert ist.

Im Rahmen der Erfindung kann ferner vorgesehen sein, dass die Öffnung mittig des Wärmeübertragers angeordnet ist und/oder dass der Wärmeübertrager kreisscheibenartig ausgestaltet ist. Unter der Öffnung kann eine Ausnehmung verstanden werden. Insbesondere ist die Öffnung durch den Wärmeübertrager und das Heizmittel somit durchgängig ausgebildet. Dabei kann die Öffnung bei einer Ausgestaltung des Wärmeübertragers als Kreisscheibe zentrisch angeordnet sein. Das Rührwerk kann zumindest ein Rotationsmesser und/oder zumindest einen Rührbesen aufweisen. Bei einer mittigen Anordnung der Öffnung kann das Rührwerk somit die Lebensmittel besonders gleichmäßig vermischen bzw. in Bewegung halten. Unter dem Antriebsmittel kann beispielsweise ein Bolzen oder ein Befestigungsmittel verstanden werden. Dabei kann das Antriebsmittel drehbar zum Heizelement ausgestaltet sein, sodass die Lebensmittel durch das Rührwerk auf der Wärmeabgabeseite des Wärmeübertragers bewegbar sein können. Weiterhin kann die Öffnung derart ausgestaltet sein, dass eine Stirnfläche der Öffnung beschichtet ist. Unter der Stirnfläche der Öffnung kann eine Innenfläche, d.h. insbesondere eine Mantelfläche der Öffnung, des Wärmeübertragers innerhalb der Öffnung verstanden werden. Dadurch kann ein zusätzlicher Korrosionsschutz für eine innenliegende Wärmeleitschicht gegeben sein. Vorzugsweise ist die Beschichtung der Stirnfläche ebenfalls lebensmittelecht ausgebildet. So kann die Beschichtung der Stirnfläche z.B. materialeinheitlich mit der ersten und/oder zweiten Funktionsschicht ausgebildet sein. Durch das Vorsehen der Öffnung kann somit ein Antrieb des Rührwerkes unterhalb des Heizelementes anordbar sein und damit dem Heizelement zum einen den direkten Kontakt zu Speisen ermöglichen und gleichzeitig ein zuverlässiges Rühren gewährleisten, ohne dass ein Einfüllbereich des Kochgefäßes durch das Rührwerk verkleinert wird. Zusätzlich oder alternativ kann ein Schutzkörper in die Öffnung eingebracht sein, um einen Schutz der Wärmeleitschicht innerhalb der Öffnung, insbesondere an der Mantelfläche der Öffnung, zu erreichen. So kann der Schutzkörper z.B. einen Edelstahl aufweisen, um einen Korrosionsschutz für die Wärmeleitschicht bereitzustellen. Vorzugsweise kann der Schutzkörper eine Buchse aufweisen. Erfindungsgemäß kann die Wärmeleitung im Zentrum des Wärmeübertragers durch die Öffnung verhindert oder unterbrochen sein. Dies kann insbesondere wünschenswert sein, da im Zentrum der Heizscheibe eine geringe Relativgeschwindigkeit bei gerührten Lebensmitteln herrscht und insbesondere damit beispielsweise ein Anbrennen verhindert werden kann, wenn in der Mitte des Wärmeübertragers nicht die gleiche Wärmeübertragung realisiert ist wie im Randbereich.

Vorteilhafterweise kann bei einem erfindungsgemäßen Kochgefäß ferner vorgesehen sein, dass eine Schichtdicke der ersten Funktionsschicht zwischen 30% und 70%, vorzugsweise zwischen 40% und 60%, besonders bevorzugt ungefähr 50%, einer Schichtdicke der Wärmeleitschicht entspricht. Dadurch kann sich beispielsweise eine Aufteilung einer Übertragungsdicke des Wärmeübertragers des Heizelementes von 25% für die erste Funktionsschicht, 50% für die Wärmeleitschicht und 25% für zweite Funktionsschicht ergeben. Dabei kann die Übertragungsdicke insbesondere ein maximales Maß des Wärmeübertragers in senkrechter Richtung sein. Analog zur Schichtdicke der ersten Funktionsschicht kann eine Schichtdicke der zweiten Funktionsschicht zwischen 30% und 70%, vorzugsweise zwischen 40% und 60%, besonders bevorzugt ungefähr 50% einer Schichtdicke der Wärmeleitschicht entsprechen. Derartige Relationen haben sich als besonders vorteilhaft erwiesen, um eine möglichst homogene Temperaturverteilung zu ermöglichen und gleichzeitig eine zuverlässige Funktion der ersten und/oder zweiten Funktionsschicht zu ermöglichen. Vorzugsweise kann das Heizelement eine Gesamtdicke von unter 5 mm, vorzugsweise von ungefähr 2 mm aufweisen. Dadurch kann das Gewicht durch eine Reduktion der äußeren Schichtdicken des Heizelementes positiv beeinflusst sein, um dem Kochgefäß zum einen einen günstigen Schwerpunkt zu geben und andererseits ein komfortables Anheben zu gewährleisten.

Im Rahmen der Erfindung ist ferner denkbar, dass das Heizmittel eine Heizschicht ist, die an der Wärmeleitschicht oder der zweiten Funktionsschicht direkt angeordnet ist. Die Heizschicht kann dabei ein Dielektrikum umfassen, um eine elektrische Komponente des Heizmittels von dem Wärmeübertrager elektrisch zu isolieren. Ein Dielektrikum kann somit ein Material umfassen, welches einen hohen elektrischen Widerstand aufweist bzw. nicht oder zumindest nur schwach leitend ist. Dadurch kann eine elektrische Komponente des Heizmittels am Wärmeübertrager angeordnet werden, ohne dass es notwendig ist, dass die Wärmeleitschicht oder die zweite Funktionsschicht dazu ausgebildet ist, elektrisch zu isolieren. Dadurch können diese hinsichtlich ihrer weiteren Funktionen, wie beispielsweise Verschweissbarkeit bzw. Wärmeleitung, in der Materialwahl flexibler sein und somit für die jeweilige Funktion noch besser abgestimmt sein. Auch kann dadurch die Wärmeleitfähigkeit der Wärmeleitschicht durch geeignete Materialwahl erhöht sein. Vorzugsweise kann das Dielektrikum dabei einen temperaturabhängigen elektrischen Widerstand aufweisen, insbesondere wobei das Dielektrikum ein Kaltleiter-Material, d.h. einen PTC-Widerstand, oder ein Heißleiter-Material, d.h. einen NTC-Widerstand, umfasst. PTC (positve temperature coefficient) bezeichnet hier einen positiven Temperaturkoeffizienten und NTC (negative temperature coefficient) einen negativen Temperaturkoeffizienten des Materials. Durch ein Kaltleiter-Material kann der elektrische Widerstand des Dielektrikums bei ebenfalls steigender Temperatur ansteigen. Wird durch das Heizmittel somit eine Erwärmung von Speisen vorgenommen, erhöht sich auch der Widerstand des Dielektrikums, so dass eine zusätzliche Schutzwirkung gegenüber einer Bestromung des Heizmittels und/oder anderer elektrischer Komponenten erzielbar ist. Durch das Heißleiter-Material kann der elektrische Widerstand des Dielektrikums bei steigender Temperatur absinken. Dadurch kann bei niedriger Temperatur insbesondere zum Zeitpunkt eines hohen Einschaltstroms ein noch höherer Widerstand vorliegen, als während eines Betriebs des Heizmittels und somit insbesondere in bestimmten Betriebspunkten eine Schutzwirkung gegenüber einer Bestromung und/oder die Lebensdauer des Heizmittels erhöht sein. Durch die Ausgestaltung des Heizmittels als Heizschicht, kann insbesondere Bauraum eingespart werden, da sich diese flach gestaltet. Insbesondere im Bodenbereich eines Kochgefäßes ist dies von Interesse, da hier vorteilhafterweise noch weitere Komponenten, wie z.B. Antriebsmittel, untergebracht werden können.

Es ist ferner bei einem erfindungsgemäßen Kochgefäß denkbar, dass das Heizmittel zumindest ein erstes Widerstandselement aufweist, das zum Erzeugen von Wärme kabelgebunden und/oder induktiv bestrombar ist. Dabei kann an dem ersten Widerstandselement mindestens abschnittsweise ein Dielektrikum angeordnet sein. Insbesondere kann das erste Widerstandselement zumindest abschnittsweise durch das Dielektrikum umgeben sein. Unter einem Widerstandselement kann dabei eine Drahtschlaufe oder eine Spule verstanden werden. So kann z.B. das erste Widerstandselement zusammen mit einem Dielektrikum die Heizschicht bilden. Dabei kann das Widerstandselement vorzugsweise durch eine Steuereinheit ansteuerbar sein. Ferner kann die Temperaturregelung des Heizmittels dadurch realisiert sein, dass das Widerstandselement dafür ausgelegt ist, in einer Frequenz ein- und ausgeschaltet zu werden. Um eine kostengünstige und gleichzeitig zuverlässige elektrische Isolation des Dielektrikums zu gewährleisten, kann das Dielektrikum eine Emaille aufweisen. Unter einer Emaille kann vorzugsweise ein Material verstanden werden, welches einen Glasfluss, Silikate und/oder Oxide umfasst. Vorzugsweise kann die Emaille ein Kaltleiter-Material oder ein Heißleiter-Material aufweisen oder als Kaltleiter-Material oder als Heißleiter-Material ausgebildet sein. Bei einer kabelgebundenen Ausgestaltung des ersten Widerstandselementes kann das erste Widerstandselement ferner ein Anschlussmittel aufweisen, durch welches das erste Widerstandelement mit einer Spannungsquelle verbindbar sein kann. Durch das Dielektrikum, welches vorzugsweise als Emaille ausgestaltet sein kann, kann insbesondere bei entsprechend ausgestalteter Schichtdicke ferner eine gute Wärmeleitfähigkeit bei gleichzeitig schnellem Ansprechen und damit einem schnellen Abrufen der Heizleistung ermöglicht sein. Ferner kann das Dielektrikum mit der zweiten Funktionsschicht stoffschlüssig verbunden sein, insbesondere wobei das Dielektrikum aufgedampft sein kann. Durch eine gute Verarbeitbarkeit ergibt sich bei dieser Befestigungsmöglichkeit ein weiterer Vorteil eines Einsatzes von Emaille. Weiterhin ist durch eine Emaille auch eine geringe Schichtdicke und damit ein geringer Bauraum des Heizelementes erreichbar. Während eine induktive Bestromung den Vorteil hat, dass ein separates Anschlussmittel nicht notwendig sein kann, bietet eine kabelgebundene Ausgestaltung den Vorteil, dass weniger elektromagnetische Emission entsteht und eine genaue, robuste Ansteuerung des Heizmittels und damit der Temperatureinstellung möglich sein kann.

Vorzugsweise kann die Heizschicht ein Schutzelement aufweisen, welches, insbesondere gegenüber des Dielektrikums, am Heizmittel angeordnet ist. Dabei kann das Schutzelement eine Glasschicht umfassen. So kann z.B. das erste und/oder das zweite Widerstandselement durch das Schutzelement zumindest einseitig gegenüber Umwelteinflüssen, wie mechanischer Beeinträchtigung und/oder Oxidation, geschützt sein. Ferner kann durch das Schutzelement auch eine Berührung des Heizmittels verhindert sein.

Es kann ferner vorgesehen sein, dass bei einem erfindungsgemäßen Kochgefäß das Heizmittel ein zweites Widerstandelement aufweist, das zum Erzeugen von Wärme unabhängig von dem ersten Widerstandselement bestrombar ist. Dabei kann auch das zweite Widerstandselement mit einem Dielektrikum angeordnet sein, insbesondere durch das Dielektrikum umgeben sein. Durch das zweite Widerstandselement kann ein zweiter Stromkreis zur Verfügung gestellt sein, sodass eine Temperaturregelung begünstig ist. Wird diese beispielsweise durch Ein- und Ausschalten der Widerstandselemente realisiert, ist durch das Vorsehen eines zweiten oder weiterer Widerstandselemente eine höhere Frequenz möglich, ohne dass beispielsweise ein Stromnetz, an welches die Küchenmaschine angeschlossen wird, negativ beeinflusst wird. Weiterhin ist auch die Genauigkeit bei der Temperaturregelung dadurch steigerbar. Vorzugsweise kann das Verhältnis der Fläche B, welche direkt von dem Widerstandselement oder von den Widerstandselementen beheizt wird, im Verhältnis zur Oberfläche A der Wärmeaufnahmeseite des Wärmeübertragers zwischen 30% ≤ B/A ≤ 100%, vorzugsweise B/A > 70% betragen. Dabei kann unter der aktiv vom Widerstandselement oder von den Widerstandselementen beheizte Fläche eine Fläche des Wärmeübertragers verstanden werden, die insbesondere direkt an dem oder den Widerstandselementen, insbesondere mit einem Dielektrikum, anliegt.

Im Rahmen der Erfindung ist denkbar, dass am Wärmeübertrager zumindest ein erstes Sensorelement angeordnet ist. Dabei kann das erste Sensorelement zum Erfassen einer Temperatur ausgebildet sein. Somit kann es sich bei dem ersten Sensorelement um einen Temperatursensor, insbesondere um einen Bimetallsensor, einen Kalt- oder Heißleiter oder einen Halbleitertemperatursensor, handeln. Dadurch kann eine Ansteuerung des Heizmittels verbessert sein. Insbesondere kann eine lokale Ansteuerung des Heizmittels, beispielsweise wenn mehrere Widerstandselemente vorgesehen sind, ermöglicht sein. Ferner ist dadurch die Kochtemperatur besser überwachbar, da die Wärmeentwicklung am Wärmeübertrager direkt gemessen werden kann und damit auch ein Einfluss der Wärmeaufnahme der Lebensmittel berücksichtigbar sein kann. Somit kann eine Zubereitungsqualität der Lebensmittel weiter gesteigert sein.

Bei einem erfindungsgemäßen Kochgefäß kann somit vorzugsweise vorgesehen sein, dass durch die erste Funktionsschicht des Wärmeübertragers ein Bodenbereich eines Garraums des Kochgefäßes ausgebildet ist. Zur Verbesserung der Wärmeübertragung kann unterhalb der ersten Funktionsschicht die Wärmeleitschicht angeordnet sein, wobei die Wärmeleitschicht vorzugsweise zwischen der ersten Funktionsschicht und der zweiten Funktionsschicht angeordnet ist. Zur Erzeugung von Wärme kann insbesondere unterhalb des Wärmeübertragers direkt an der zweiten Funktionsschicht das Heizmittel befestigt sein. Vorzugsweise ist dazu das Dielektrikum mit der zweite Funktionsschicht des Wärmeübertragers stoffschlüssig verbunden, insbesondere wobei das Dielektrikum auf die zweite Funktionsschicht aufgedampft sein kann. Innerhalb des Dielektrikums und/oder unterhalb des Dielektrikums kann weiterhin vorteilhafterweise das erste und/oder das zweite Widerstandselement angeordnet sein, insbesondere wobei das erste und/oder zweite Widerstandselement zumindest bereichsweise vollständig durch das Dielektrikum umgeben sind. Durch einen derartigen Aufbau ergibt sich zum einen eine kostengünstige Herstellung des Heizelementes und damit des gesamten Kochgefäßes. Ferner kann dadurch eine flache Bauweise des Heizelementes erreicht werden, so dass am Kochgefäß Bauraum für weitere Bauteile zur Verfügung gestellt werden kann. Insbesondere kann durch einen derartigen Aufbau ein Unterbodenbereich des Kochgefäßes, welcher nicht als Kochraum nutzbar ist, gering gehalten werden. Gleichzeitig kann durch den zuvor beschriebenen Aufbau eine Wärmeübertragung verbessert sein.

Gemäß einem weiteren Aspekt der Erfindung ist eine Küchenmaschine mit einem Kochgefäß und einem Antrieb für ein Rührwerk beansprucht. Das Kochgefäß ist dabei gemäß einem erfindungsgemäßen Kochgefäß ausgestaltet. Vorzugsweise kann der Antrieb mit einem Antriebsmittel verbunden sein, sodass das Rührwerk beispielsweise innerhalb des Kochgefäßes angeordnet sein kann, während der Antrieb unterhalb des Kochgefäßes angeordnet sein kann. Dabei kann vorzugsweise das Antriebsmittel durch die Öffnung des Wärmeübertragers geführt sein, so dass der Antrieb unterhalb des Heizelementes außerhalb eines Garraums des Kochgefäßes angeordnet sein kann und insbesondere gleichzeitig ein Rühren durch ein Rührmittel im Garraum ermöglicht sein kann. Der Antrieb kann vorzugsweise als Elektroantrieb ausgebildet sein, sodass beispielsweise für den Antrieb und das Heizmittel die gleiche Stromquelle nutzbar sein kann. Somit bringt eine erfindungsgemäße Küchenmaschine die gleichen Vorteile mit sich, wie sie ausführlich mit Bezug auf ein erfindungsgemäßes Heizelement beschrieben worden sind.

Gemäß einem weiteren Aspekt der Erfindung ist ein Verfahren zur Herstellung eines Heizelementes für ein Kochgefäß für eine Küchenmaschine beansprucht. Dabei weist das Verfahren zumindest die folgenden Schritte auf:
a) Bereitstellen eines Wärmeübertragers, aufweisend die folgenden Schritte:
   - Bereitstellen einer metallischen Wärmeleitplatte und mindestens einer ersten Funktionsplatte, wobei die Wärmeleitplatte und die erste Funktionsplatte jeweils mindestens einen Formbereich aufweisen,
   - Verbinden zumindest des Formbereiches der Wärmeleitplatte mit dem Formbereich der ersten Funktionsplatte, wodurch eine Wärmeleitschicht und zumindest eine erste Funktionsschicht mit einer Wärmeabgabeseite, insbesondere zur Kontaktierung von Lebensmitteln, entsteht, sodass Wärme von der Wärmeleitschicht flächig an die erste Funktionsschicht übertragbar ist,
b) Anordnen eines Heizmittels am Wärmeübertrager.

Bei dem Kochgefäß kann es sich insbesondere um ein erfindungsgemäßes Kochgefäß mit einem Heizelement, wie zuvor beschrieben, handeln. Bei der Küchenmaschine kann es sich ferner insbesondere um eine erfindungsgemäße Küchenmaschine, wie zuvor beschrieben handeln. Unter einer Wärmeleitplatte und einer ersten Funktionsplatte kann ein plattenförmiges Rohmaterial verstanden werden, welches ein entsprechendes Einsatzmaterial aufweist. So kann die Wärmeleitplatte vorzugsweise ein Material aufweisen, welches eine höhere Wärmeleitfähigkeit hat als das Material der ersten Funktionsplatte. Und unter einem Formbereich kann im Rahmen der vorliegenden Erfindung vorzugsweise ein Bereich verstanden werden, der dazu geeignet ist, zum Wärmeübertrager verarbeitet zu werden. So kann dieser ausreichend groß ausgebildet sein, um einen Durchmesser der Wärmeabgabeseite des Wärmeübertragers zu gewährleisten. Insbesondere ist es nicht notwendig, dass der Formbereich gesondert gekennzeichnet ist. Somit kann jeder Bereich der Wärmeleitplatte und/oder der ersten Funktionsplatte als Formbereich dienen, insbesondere sofern der jeweilige Bereich die notwendigen Eigenschaften, wie zum Beispiel Größe, Materialoberfläche, eine Kombination des Vorhergenannten oder dergleichen aufweist. Dabei können lediglich einzelne Formbereiche oder die Platten vollständig verbunden werden. Damit bringt ein erfindungsgemäßes Verfahren zur Herstellung eines Heizelementes die gleichen Vorteile mit sich, wie sie ausführlich mit Bezug auf ein Heizelemente eines erfindungsgemäßen Kochgefäßes beschrieben worden sind. Dabei wird eine kostengünstige Möglichkeit zur Verfügung gestellt, ein Heizelement und damit ein Kochgefäß für eine Küchenmaschine herzustellen.

Es ist ferner denkbar, dass bei einem erfindungsgemäßen Verfahren das Bereitstellen des Wärmeübertragers gemäß Schritt a) ferner ein Bereitstellen einer zweiten Funktionsplatte umfasst, die einen weiteren Formbereich aufweist, der mit den Formbereichen der Wärmeleitschicht und der ersten Funktionsplatte verbunden wird, sodass eine zweite Funktionsschicht des Wärmeübertragers gebildet wird. Dabei kann der Formbereich der Wärmeleitplatte sandwichartig zwischen den Formbereichen der ersten und zweiten Funktionsplatte angeordnet werden. Um eine dritte oder eine weitere Funktionsschicht zu gewährleisten, sind dabei ferner auch ein Bereitstellen und Verbinden der jeweiligen Formbereiche einer dritten oder weiterer Funktionsplatten denkbar. Durch das Bereitstellen der zweiten Funktionsplatte kann eine weitere positive Eigenschaft in den Wärmeübertrager integriert werden, sodass dieser beispielsweise bei einer sandwichartigen Anordnung von beiden Seiten verschweissbar ist, um mit dem Kochgefäß verbunden zu werden.

Es ist ferner bei einem erfindungsgemäßen Verfahren denkbar, dass das Verfahren folgenden Schritt aufweist:
c) Anbringen von zumindest einem ersten Sensorelement auf der ersten und/oder zweiten Funktionsschicht, insbesondere wobei ein zweites Sensorelement derart angebracht wird, dass eine Temperaturverteilung erfassbar ist.

Dadurch kann eine Temperatur und/oder eine Temperaturverteilung in einfacher Art und Weise kostengünstig erfassbar sein, wobei durch die gute Wärmeleitfähigkeit der Wärmeleitschicht im Betrieb die Temperaturverteilung zumindest teilweise homogenisiert sein kann und damit ein Sensorelement beispielsweise an der zweiten Funktionsschicht ausreichen kann, um eine zuverlässige Temperaturverteilung zu ermitteln. Die Genauigkeit der Ansteuerung und Messung kann also insgesamt gesteigert sein.

Im Rahmen der Erfindung ist ferner denkbar, dass das Bereitstellen des Wärmeübertragers gemäß Schritt a) ferner folgenden Schritt umfasst:
- Heraustrennen der Formbereiche aus der Wärmeleitplatte und der ersten und/oder zweiten Funktionsplatte, insbesondere wobei das Heraustrennen der Formbereiche aus der Wärmeleitplatte und einer der Funktionsplatten oder beider Funktionsplatten gleichzeitig vorgesehen ist.

Bei dem Heraustrennen kann ferner gleichzeitig ein Verformen der Formbereiche vorgesehen sein, sodass das Heraustrennen im gleichen Verfahrensschritt erfolgen kann wie ein Verformen, um den Wärmeübertrager beispielsweise an eine Bodengeometrie des Kochgefäßes anzupassen. Das Heraustrennen der Formbereiche kann vorzugsweise durch ein Stanzverfahren ausgeführt werden. Unter einem Stanzverfahren kann dabei ein Stanzen oder Feinschneiden oder dergleichen verstanden werden. Insbesondere können auch weitere Formbereiche von weiteren Funktionsschichten aus den jeweiligen Platten im Zuge dieses Verfahrensschrittes herausgetrennt werden. So kann ein Niederhalter im Stanzverfahren dazu genutzt werden, eine Verformung in die Formbereiche einzubringen. Zusätzlich oder alternativ ist ferner denkbar, dass das Stanzverfahren eine Folgeverbund-Fertigung umfasst. Ferner kann das Heraustrennen der Formbereiche einzeln aus der Wärmeleitplatte und/oder den Funktionsplatten vorgesehen sein oder das Heraustrennen kann nach dem Verbinden der Formbereiche oder nach einem vollflächigen Verbinden der Platten vorgesehen sein. Somit ergibt sich ein einfaches Formgebungsverfahren, welches auch für einfache Fügeverfahren nachträglich gut geeignet ist. So können scheiben- oder plattenförmige Komponenten durch ein Stanzverfahren besonders vorteilhaft, insbesondere automatisiert, bearbeitet werden. Dabei kann ein gleichzeitiges Heraustrennen der Formbereiche insbesondere eine besonders hohe Genauigkeit bei der Fertigung des Heizelementes zufolge haben.

Es ist denkbar, dass das Anordnen des Heizmittels am Wärmeübertrager ein Aufdrucken einer Heizschicht, insbesondere durch Siebdruck, auf den Wärmeübertrager umfasst. Das Aufdrucken der Heizschicht kann vorzugsweise das Aufbringen eines ersten und/oder eines zweiten Widerstandselementes umfassen, wobei vorzugsweise vor dem Aufbringen des ersten und/oder zweiten Widerstandselementes zumindest bereichsweise ein Dielektrikum am Wärmeübertrager angeordnet wird. Auch das Anordnen des Dielektrikums kann dabei durch ein Aufdrucken, zum Beispiel mittels Siebdruck, oder durch einen Sprühprozess, durchgeführt werden. Somit ergeben sich die Vorteile, dass das Heizmittel besonders kostengünstig, insbesondere automatisiert, und mit einer hohen Genauigkeit am Wärmeübertrager angeordnet werden kann. Ferner eignet sich das Aufdrucken als Fertigungsverfahren besonders für dünnschichtige Elemente, wie beispielsweise eine Ausbildung des Heizmittels als Heizschicht, insbesondere als Dickschichtheizung.

Es ist ferner vorgesehen, dass bei einem erfindungsgemäßen Verfahren das Verbinden der Formbereiche ein Verpressen der Formbereiche umfasst. Dabei nimmt die Dicke der Formbereiche ab. Somit kann das Verpressen vorzugsweise ein Plattieren und/oder ein Walzen der Formbereiche umfassen. Ferner kann das Verbinden der Formbereiche ein Erhitzen der Formbereiche umfassen, wobei das Erhitzen vorzugsweise bis zu einer Temperatur durchgeführt wird, die unterhalb der Schmelztemperatur der beteiligten Werkstoffe liegt. Dadurch kann ein besonders fester Verbund erreicht werden. Nimmt die Dicke der Formbereiche ab, kann aus einer vorhandenen Platte durch plastische Verformung eine breitere Platte gewonnen werden und gleichzeitig ein fester Verbund geschaffen werden, der auch im Betrieb eine zuverlässige Festigkeit aufweist.

Im Rahmen der Erfindung ist ferner denkbar, dass das Bereitstellen des Wärmeübertragers gemäß Schritt a) ferner folgenden Schritt umfasst:
- Vorsehen einer Öffnung im Wärmeübertrager.
Somit kann der herzustellende Wärmeübertrager dazu geeignet sein, dass durch die Öffnung zumindest ein Teil eines Rührwerkes hindurchgeführt werden kann. Dadurch eignet sich der herzustellende Wärmeübertrager besonders für die Anwendung in einer Küchenmaschine, insbesondere einer Küchenmaschine, bei welcher ein Teil des Rührwerkes bodenseitig durch das Heizelement hindurchgeführt oder hindurchführbar ist. Vorzugsweise kann das Vorsehen der Öffnung im gleichen Werkzeug und/oder gleichzeitig mit dem Heraustrennen der Formbereiche aus der Wärmeleitplatte und der ersten und/oder zweiten Funktionsplatte, besonders bevorzugt im Zuge desselben Arbeitsschrittes, durchgeführt werden. So ist beispielsweise denkbar, dass die Öffnung und die Formbereiche in einem Stanzverfahren, insbesondere im selben Hub, gestanzt werden oder, dass das Stanzverfahren in einem Folgeverbundwerkzeug durchgeführt wird, wobei die Formbereiche und die Öffnung nacheinander gestanzt werden.

Vorzugsweise kann das Verfahren in der dargestellten Reihenfolge der Verfahrensschritte ausgeführt werden. So kann zunächst vorgesehen sein, dass die Wärmeleitplatte und die erste Funktionsplatte und/oder die zweite Funktionsplatte bereitgestellt werden, daraufhin die Formbereiche der Platten verbunden werden und anschließend ein Heraustrennen erfolgt. Ebenso kann jedoch vorgesehen sein, dass die Schritte in einer anderen Reihenfolge ausgeführt werden, sodass beispielsweise zunächst die Platten bereitgestellt werden, die Formbereiche aus den Platten herausgetrennt werden und anschließend die Formbereiche derart verbunden werden, dass sich der Wärmeübertrager ergibt. Zudem ist es denkbar, dass das Bereitstellen der Platten und das Verbinden der Platten gleichzeitig durchgeführt werden. So kann das Verfahren beispielsweise ein additives Fertigungsverfahren, insbesondere ein 3D-Druck, sein. Ferner können einzelne und/oder alle Schritte des Verfahrens wiederholt werden, sofern dies technisch sinnvoll ist. Als Herstellverfahren zur Herstellung eines Heizmittels für ein Kochgefäß für eine Küchenmaschine ist das Verfahren damit ferner ebenfalls dazu geeignet, zumindest einen Teil einer Küchenmaschine, insbesondere einer zuvor beschriebenen Küchenmaschine, in einfacher Art und Weise vorteilhaft herzustellen.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung einzuschränken. Es zeigen:
- Fig. 1: ein Heizelement für ein erfindungsgemäßes Kochgefäß von seiner unteren Seite in perspektivischer, schematischer Ansicht in einem ersten Ausführungsbeispiel,
- Fig. 2: das Heizelement für ein erfindungsgemäßes Kochgefäß des ersten Ausführungsbeispiels in geschnittener schematischer Ansicht,
- Fig. 3: ein gattungsgemäßes Heizelement für ein gattungsgemäßes Kochgefäß in geschnittener schematischer Ansicht in einem weiteren Ausführungsbeispiel,
- Fig. 4: ein Heizelement für ein erfindungsgemäßes Kochgefäß in geschnittener schematischer Ansicht in einem weiteren Ausführungsbeispiel,
- Fig. 5: ein gattungsgemäßes Kochgefäß mit einem Heizelement in einem weiteren Ausführungsbeispiel in geschnittener Teilansicht,
- Fig. 6: ein erfindungsgemäßes Kochgefäß mit einem Heizelement in geschnittener schematischer Ansicht in einem weiteren Ausführungsbeispiel,
- Fig. 7: ein erfindungsgemäßes Kochgefäß mit einem Heizelement in geschnittener schematischer Ansicht in einem weiteren Ausführungsbeispiel,
- Fig. 8: eine erfindungsgemäße Küchenmaschine mit einem erfindungsgemäßen Kochgefäß mit einem Heizelement in einem weiteren Ausführungsbeispiel,
- Fig. 9: eine schematische Ansicht eines Bereitstellens eines Wärmeübertragers eines erfindungsgemäßen Verfahrens in einem weiteren Ausführungsbeispiel,
- Fig. 10: ein erfindungsgemäßes Verfahren in schematischer Darstellung der Verfahrensschritte in einem weiteren Ausführungsbeispiel.

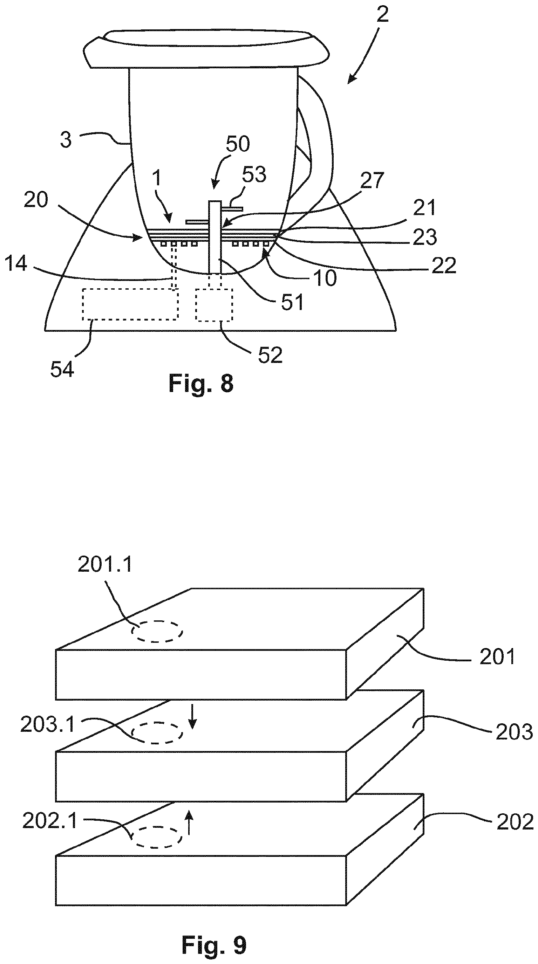

In den nachfolgenden Figuren werden für die gleichen technischen Merkmale auch von unterschiedlichen Ausführungsbeispielen die identischen Bezugszeichen verwendet. In den vorliegenden Figuren ist insbesondere eine Schichtdicke der dargestellten Schichten nur schematisch dargestellt. Eine Küchenmaschine 2, auf welche in den nachfolgend beschriebenen Ausführungsbeispielen Bezug genommen wird ist beispielhaft in Figur 8 gezeigt.

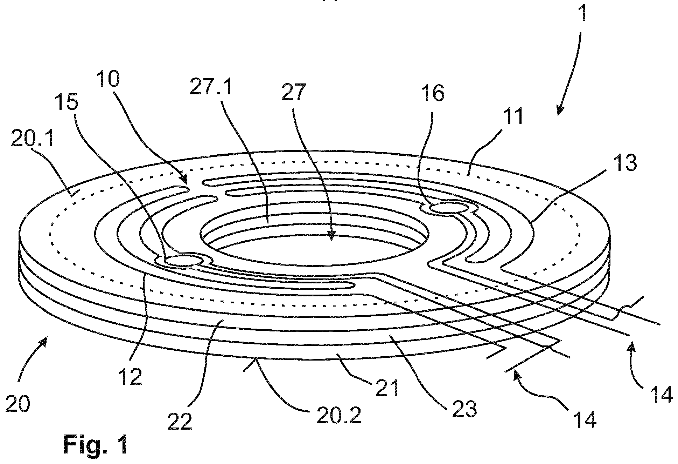

Fig. 1 zeigt ein Heizelement 1 für ein erfindungsgemäßes Kochgefäß 3 für eine Küchenmaschine 2 in perspektivischer schematischer Ansicht in einem ersten Ausführungsbeispiel. Dabei weist das Heizelement 1 ein Heizmittel 10 auf, welches an einer Wärmeaufnahmeseite 20.1 eines Wärmeübertragers 20 angeordnet ist. Der Wärmeübertrager 20 weist ferner eine metallische Wärmeleitschicht 23 auf, die sandwichartig zwischen einer ersten Funktionsschicht 21 und einer zweiten Funktionsschicht 22 angeordnet ist. Dabei bildet die erste Funktionsschicht 21 gleichzeitig eine Wärmeabgabeseite 20.2 des Wärmeübertrages 20, welche mit Lebensmitteln kontaktierbar ist. Vorzugsweise kann die erste Funktionsschicht 21 dazu lebensmittelecht ausgestaltet sein. Daher kann die erste Funktionsschicht 21 beispielsweise einen Edelstahl umfassen oder aus einem Edelstahl bestehen. Die Wärmeleitschicht 23 ist ferner insbesondere aus einem Material gebildet, welches eine höhere Wärmeleitfähigkeit aufweist als die erste Funktionsschicht 21. Vorzugsweise weist die Wärmeleitschicht 23 Kupfer und/oder Aluminium auf. Das Heizmittel 10 ist ferner als Heizschicht ausgebildet und weist ein erstes Widerstandselement 12 und ein zweites Widerstandselement 13 mit einem Dielektrikum 11 auf, welches zumindest teilweise zwischen den Widerstandselementen 12, 13 und dem Wärmeübertrager 20 angeordnet ist. Das Dielektrikum 11 ist dabei dazu ausgebildet, einen elektrischen Kontakt zwischen den Widerstandselementen 12, 13 und der zweiten Funktionsschicht 22 zu unterbinden oder zumindest zu reduzieren, sodass das Heizmittel 10 insbesondere direkt an dem Wärmeübertrager 20 angeordnet ist. Um eine kabelgebundene Bestromung zu ermöglichen, können das erste Widerstandselement 12 und das zweite Widerstandselement 13 Anschlussmittel 14 aufweisen, welche zum Anschluss an eine Steuereinheit 54 (wie beispielsweise im Ausführungsbeispiel gemäß Figur 8 gezeigt) und/oder eine Spannungsquelle geeignet sind. Innerhalb der Heizschicht ist ferner zumindest ein erster Sensor 15 und/oder ein zweiter Sensor 16 zur Erfassung einer lokalen Temperatur angeordnet. Dadurch, dass die Wärmeleitschicht 23 eine homogene Temperaturverteilung begünstigt, kann auch die Temperaturmessung verbessert sein.

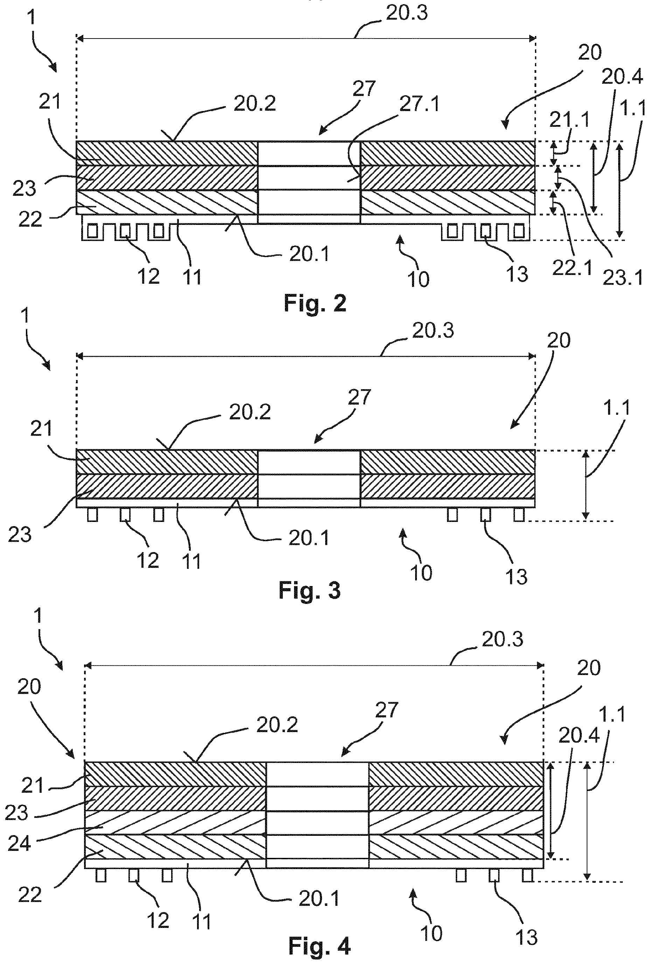

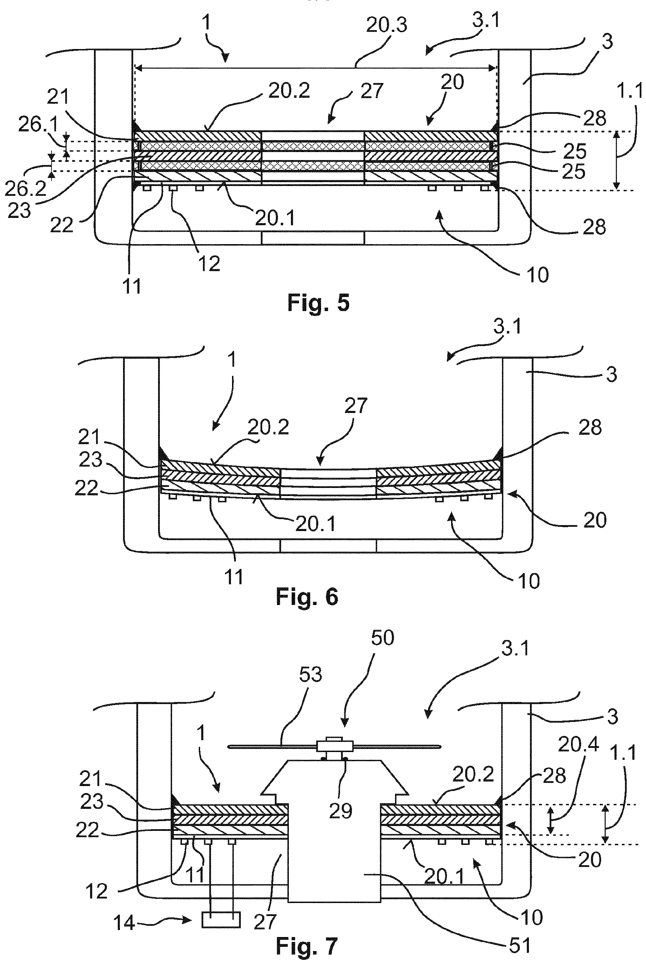

Fig. 2 zeigt das Heizelement 1 für ein erfindungsgemäßes Kochgefäß 3 für eine Küchenmaschine 2 des ersten Ausführungsbeispiels in geschnittener Ansicht. Dabei wird deutlich, dass das erste Widerstandselement 12 und das zweite Widerstandselement 13 von dem Dielektrikum 11 zumindest teilweise ummantelt sind. Ferner weist der kreisscheibenförmig ausgebildete Wärmeübertrager 20 eine Öffnung 27 auf, die zentrisch des Wärmeübertragers 20 angeordnet ist. Ferner erstreckt sich die Öffnung 27 auch durch das Heizmittel 10, sodass beispielsweise ein Antriebsmittel 51 (wie beispielsweise in den Ausführungsbeispielen gemäß Figuren 7 und 8 gezeigt) hindurchführbar ist. Vorzugsweise kann eine Schichtdicke 21.1 der ersten Funktionsschicht 21 zwischen 30% und 70%, vorzugsweise zwischen 40% und 60%, besonders bevorzugt ungefähr 50% einer Schichtdicke 23.1 der Wärmeleitschicht 23 entsprechen. Ferner kann analog eine Schichtdicke 22.1 der zweiten Funktionsschicht 22 zwischen 30% und 70%, vorzugsweise zwischen 40% und 60%, besonders bevorzugt ungefähr 50%, der Schichtdickte 23.1 der Wärmeleitschicht 23 entsprechen. Dementsprechend kann sich eine Gesamtaufteilung einer Übertragungsdicke 20.4 des Wärmeübertragers 20 des Heizelementes 1 derart ergeben, bei welcher die Schichtdicke 21.1 der ersten Funktionsschicht 25% der Übertragungsdicke 20.4 beträgt, die Schichtdicke 23.1 der Wärmeleitschicht 23 50% und die Schichtdicke 22.1 der zweiten Funktionsschicht 22 ungefähr 25%. Dabei kann ein maximaler Durchmesser 20.3 der Wärmeabgabeseite 20.2 in einem Verhältnis zu einer Gesamtdicke 1.1 des Heizelementes 1 von 10 bis 250 stehen. Um einen Schutz der Wärmeleitschicht 23 vor Umweltbedingungen zu verbessern, kann ferner vorgesehen sein, dass eine Stirnfläche 27.1 der Öffnung 27 beschichtet ist. Zusätzlich oder alternativ zur Beschichtung der Stirnfläche 27.1 kann ein Schutzkörper vorgesehen sein, der in die Öffnung eingebracht ist, um einen Schutz der Wärmeleitschicht 23 zu erreichen. Vorzugsweise kann der Schutzkörper als Buchse ausgestaltet sein. Vorzugsweise kann die Beschichtung materialeinheitlich mit der ersten und/oder der zweiten Funktionsschicht 21, 22 ausgebildet sein.

Fig. 3 zeigt ein gattungsgemäßes Heizelement 1 für ein gattungsgemäßes Kochgefäß 3 für eine Küchenmaschine 2 in einem weiteren Ausführungsbeispiel in geschnittener schematischer Ansicht. Dabei umfasst ein Wärmeübertrager 20 des Heizelements 1 eine erste Funktionsschicht 21 und eine metallische Wärmeleitschicht 23, wobei die Wärmeleitschicht 23 vorzugsweise aus einem Material gebildet ist, welches eine höhere Wärmeleitfähigkeit aufweist als die erste Funktionsschicht 21. An der ersten Funktionsschicht 21 weist der Wärmeübertrager 20 ferner eine Wärmeabgabeseite 20.2 und an der Wärmeleitschicht 23 eine Wärmeaufnahmeseite 20.1 auf. Dabei ist die Wärmeaufnahmeseite 20.1 dazu ausgebildet, Wärme aufzunehmen, welche durch ein Heizmittel 10 erzeugbar ist. Das Heizmittel 10 ist weiterhin an der Wärmeaufnahmeseite 20.1 des Wärmeübertragers 20 angeordnet. Dabei weist das Heizmittel 10 zumindest ein erstes und ein zweites Widerstandselement 12, 13 auf, wobei zwischen dem ersten und zweiten Widerstandselement 12, 13 und der Wärmeleitschicht 23 des Wärmeübertragers 20 ein Dielektrikum 11 schichtartig aufgebracht ist. Vorzugsweise kann das Dielektrikum 11 eine Emaille umfassen. Die Emaille kann ferner ein Kaltleiter-Material oder Heißleiter-Material aufweisen oder als Kaltleiter-Material oder Heißleiter-Material ausgebildet sein, so dass der Widerstand des Dielektrikums 11 vorteilhafterweise einen temperaturabhängigen elektrischen Widerstand aufweist. Dadurch kann eine Sicherheit des Heizelementes 1 und damit des Kochgefäßes 3 insbesondere bei einer Bestromung der Widerstandselemente 12, 13 insbesondere in unterschiedlichen Betriebspunkten erhöht sein.

Fig. 4 zeigt ein Heizelement 1 für ein erfindungsgemäßes Kochgefäß 3 für eine Küchenmaschine 2, welches geschnitten schematisch dargestellt ist, in einem weiteren Ausführungsbeispiel. Dabei weist das Heizelement 1 einen Wärmeübertrager 20 zur Übertragung von Wärme, welche durch ein Heizmittel 10 erzeugbar ist, auf. Um Wärme zu erzeugen, weist das Heizmittel 10 ein erstes Widerstandselement 12 und ein zweites Widerstandselement 13 auf, welche bestrombar sind und durch einen elektrischen Widerstand Wärme erzeugen. Die Widerstandselemente 12, 13 sind mit einem schichtartigen Dielektrikum 11 an einer Wärmeaufnahmeseite 20.1 des Wärmeübertragers 20 angeordnet. Um Wärme von der Wärmeaufnahmeseite 20.1 an eine Wärmeabgabeseite 20.2 des Wärmeübertragers 20 zu übertragen, weist der Wärmeübertrager 20 des Ausführungsbeispiels der Figur 4 ferner zumindest vier Schichten auf, wobei an der Wärmeabgabeseite 20.2 zunächst eine erste Funktionsschicht 21 angeordnet ist, diese mit einer metallischen Wärmeleitschicht 23 kontaktiert ist und unterhalb der Wärmeleitschicht 23 eine zweite Funktionsschicht 22 und eine weitere Funktionsschicht 24 vorgesehen sind. Das Heizelement 1 weist ferner eine Öffnung 27 auf, die zentrisch vorgesehen ist. Durch die weitere Funktionsschicht 24 können neben den Funktionen der ersten und zweiten Funktionsschicht 21, 22 im Gegensatz zum ersten Ausführungsbeispiel noch weitere unterschiedliche Funktionen im Wärmeübertrager 20 kombiniert werden, indem eine geschickte Materialwahl getroffen wird. So kann beispielsweise weitere Elektronik in die weitere Funktionsschicht 24 eingebettet sein. Vorzugsweise kann ferner ein Verhältnis eines maximalen Durchmessers 20.3 des Wärmeübertragers 20 insbesondere auf der Wärmeabgabeseite 20.2 des Heizelementes 1 zu einer Gesamtdicke 1.1 des Wärmeübertragers 20 mit dem Heizmittel 10 des Heizelementes 1 zwischen 10 und 250 betragen.

Fig. 5 zeigt ein gattungsgemäßes Kochgefäß 3 für eine Küchenmaschine 2, welches ein Heizelement 1 gegenüber einer Einfüllöffnung 3.1 des Kochgefäßes 3 bodenseitig aufweist. Dabei weisen sowohl das Heizelement 1, als auch eine Unterseite des Kochgefäßes 3 eine Öffnung 27 auf, welche dazu ausgebildet ist, ein Antriebsmittel 51 eines Rührwerkes 50 (wie beispielsweise im Ausführungsbeispiel gemäß Figur 8 gezeigt) aufzunehmen. Ferner ist das Heizelement 1 zumindest an einer ersten Funktionsschicht 21 eines Wärmeübertragers 20 des Heizelementes 1 über eine umlaufende Schweißnaht 28 verbunden. Der Wärmeübertrager 20 weist dabei die erste Funktionsschicht 21 auf, die mit einem Abstand 26.1 zu einer metallischen Wärmeleitschicht 23 derart angeordnet ist, dass von einem Heizmittel 10 erzeugte Wärme von der Wärmeleitschicht 23 flächig an die erste Funktionsschicht 21 übertragbar ist. Um eine Verbindung zwischen der ersten Funktionsschicht 21 und der Wärmeleitschicht 23 zu gewährleisten, können ferner Befestigungsstellen 25 vorgesehen sein, welche den Abstand 26.1 zwischen der ersten Funktionsschicht 21 und der Wärmeleitschicht 23 überbrücken. Dabei kann es sich beispielsweise um eine Punktverschweißung handeln oder um ein zusätzliches Befestigungsmittel. Unterhalb der Wärmeleitschicht 23 ist ferner mit einem Abstand 26.2 eine zweite Funktionsschicht 22 angeordnet, welche eine Wärmeaufnahmeseite 20.1 des Wärmeübertragers 20 bildet. Auch der Abstand 26.2 zwischen der Wärmeleitschicht 23 und der zweiten Funktionsschicht 22 kann zumindest eine Befestigungsstelle 25 aufweisen. Zwischen der ersten Funktionsschicht 21 und der Wärmeleitschicht 23 und/oder der zweiten Funktionsschicht 22 und der Wärmeleitschicht 23 kann beispielsweise eine Wärmeleitpaste oder Luft vorgesehen sein, um eine Wärmeleitung über den jeweiligen Abstand 26.1, 26.2 zu verbessern. Auch die zweite Funktionsschicht 22 kann mit dem Kochgefäß 3 über eine umlaufende Schweißnaht 28 verbunden sein. Das Heizmittel 10, welches dazu ausgebildet ist, Wärme an eine Wärmeaufnahmeseite 20.1 des Wärmeübertragers 20 abzugeben, weist ferner ein erstes Widerstandselement 12 auf, welches mit einem Dielektrikum 11 am Wärmeübertrager 20 angeordnet ist.

Fig. 6 zeigt ferner ein erfindungsgemäßes Kochgefäß 3 für eine Küchenmaschine 2, welches mit einem bodenseitig ein Heizelement 1 aufweist. Dabei bildet das Heizelement 1 mit einer Wärmeabgabeseite 20.2 zum Erhitzen von Lebensmitteln die Unterseite des Garraumes des Kochgefäßes 3. Ferner weist das Heizelement 1 ein Heizmittel 10 auf, welches an einem Wärmeübertrager 20 angeordnet ist. Der Wärmeübertrager 20 und insbesondere das Heizmittel 10 sind ferner gewölbt ausgeführt, sodass das Heizelement 10 einen in Richtung einer Einfüllöffnung 3.1 des Kochgefäßes 3 sich erhebenden Rand aufweist. Dadurch können Lebensmittel auch im Randbereich der Unterseite des Kochgefäßes 3 vorteilhaft erhitzt werden. Alternativ kann das Heizelement 10 einen entgegen der Richtung der Einfüllöffnung 3.1 des Kochgefäßes 3 sich erstreckenden, insbesondere absenkenden, Rand aufweisen. Dadurch kann das Entstehen von Zugspannungen in einem Dielektrikum 11 des Heizmittels 10 reduziert oder vollständig vermieden werden. Vorzugsweise kann das Heizelement 10 derart ausgestaltet sein, dass eine Wärmeübertragungsfähigkeit des Heizmittels 10 radial zunimmt oder radial abnimmt, so dass insbesondere ein ungleichmäßiger Wärmebedarf der Speisen bei bestimmten Rührgeschwindigkeiten berücksichtigt ist. Das Heizmittel 10 des Heizelementes 1 ist ferner an einer Wärmeaufnahmeseite 20.1 des Wärmeübertragers 20 angeordnet. Der Wärmeübertrager 20 weist dabei ferner eine zweite Funktionsschicht 22 auf, welche mit dem Heizmittel 10 über das Dielektrikum 11 des Heizmittels 10 in Kontakt ist. Durch das Dielektrikum 11 ist eine elektrische Isolation gegenüber einem ersten Widerstandselement 12 des Heizmittels 10 gegeben. An der Wärmeabgabeseite 20.2 weist der Wärmeübertrager 20 ferner eine erste Funktionsschicht 21 auf, die vorteilhafterweise lebensmittelecht ausgebildet sein kann. Vorzugsweise können die erste Funktionsschicht 21 und die zweite Funktionsschicht 22 materialeinheitlich mit dem Kochgefäß 3 ausgeführt sein, sodass eine Verschweißbarkeit des Heizelementes 1 durch eine Schweißnaht 28 am oberen und/oder unteren Rand gegeben sein kann. Zwischen den Funktionsschichten 21, 22 ist ferner sandwichartig eine metallische Wärmeleitschicht 23 angeordnet, sodass eine Temperatur, die von dem Heizmittel 10 erzeugt wird, in der Wärmeleitschicht 23, die vorzugsweise eine gute Wärmeleitfähigkeit besitzt, gleichmäßig verteilt werden kann und somit flächig an die erste Funktionsschicht 21 und damit auch insbesondere gleichmäßig flächig an die Lebensmittel im Kochgefäß 3 abgegeben werden kann. Auch in diesem Ausführungsbeispiel kann eine Öffnung 27 vorgesehen sein, sodass beispielsweise ein Antriebsmittel 51 hindurchführbar sein kann. Insbesondere kann das dargestellte Heizelement 1 z.B. ein Heizelement gemäß dem ersten Ausführungsbeispiel sein.

Fig. 7 zeigt ein erfindungsgemäßes Kochgefäß 3 mit einem Heizelement 1 für eine Küchenmaschine 2 in einem weiteren Ausführungsbeispiel. Dabei umfasst ein Heizmittel 10 des Heizelementes 1 zumindest ein erstes Widerstandselement 12, welches über zumindest ein Anschlussmittel 14, das aus dem Kochgefäß 3 herausführbar ist, an eine Spannungsquelle und/oder eine Steuereinheit 54 angeschlossen werden kann. Durch ein Dielektrikum 11 von dem ersten Widerstandselement 12 elektrisch getrennt ist ferner ein Wärmeübertrager 20 angeordnet, der an einer Wärmeaufnahmeseite 20.1 zur Aufnahme von vom Heizmittel 10 erzeugter Wärme ausgebildet ist. Dabei weist der Wärmeübertrager 20 ferner drei Schichten auf, eine erste Funktionsschicht 21, die an einer Wärmeabgabeseite 20.2 des Wärmeübertragers 20 angeordnet ist, eine metallische Wärmeleitschicht 23 und eine zweite Funktionsschicht 22 an der Wärmeaufnahmeseite 20.1. Wie im ersten Ausführungsbeispiel ist der Wärmeübertrager 20 dabei sandwichartig ausgebildet, wobei die Wärmeleitschicht 23 zwischen der ersten und zweiten Funktionsschicht 21, 22 angeordnet ist. Das Heizelement 1 kann dabei an der Wärmeaufnahmeseite 20.1 und/oder an der Wärmeabgabeseite 20.2 durch eine Schweißnaht 28 umlaufend verschweißt sein. Dadurch kann sich eine besonders dichte Befestigung des Heizelementes 1 mit dem Kochgefäß 3 ergeben. Ferner ist im vorliegenden Ausführungsbeispiel ein Antriebsmittel 51 eines Rührwerkes 50 durch eine Öffnung 27 des Heizelementes 1 hindurchgeführt. Um eine Dichtigkeit gegenüber Speisen, die in das Kochgefäß 3 über eine Einfüllöffnung 3.1 eingeführt werden können, zu gewährleisten, ist ferner eine Dichtung 29 vorgesehen, die mit dem Antriebsmittel 51 dichtend angeordnet ist. Das Antriebsmittel 51 ist ferner mit einem Rührmittel 53 verbunden, sodass bei einer Drehung des Antriebsmittels 51 sich auch das Rührmittel 53 gut drehen kann. Das Rührmittel 53 kann vorzugsweise als Messer oder Rührbesen ausgestaltet sein. Auch mehrere Rührmittel sind dabei denkbar.

Fig. 8 zeigt eine erfindungsgemäße Küchenmaschine 2 mit einem erfindungsgemäßen Kochgefäß 3 in einem weiteren Ausführungsbeispiel. Dabei ist bodenseitig des Kochgefäßes 3 ein Heizelement 1 angeordnet ist. Das Heizelement 1 weist dabei einen Wärmeübertrager 20 mit mehrere Schichten auf, insbesondere eine erste Funktionsschicht 21 an einer Wärmeabgabeseite 20.2, eine metallische Wärmeleitschicht 23 und eine zweite Funktionsschicht 22. An einer Wärmeaufnahmeseite 20.1 (wie beispielsweise in den Ausführungsbeispielen der Figuren 1 bis 7 gezeigt) des Wärmeübertragers 20 des Heizelementes 1 ist ferner ein Heizmittel 10 zur aktiven Beheizung des Kochgefäßes 3 bzw. von Speisen innerhalb des Kochgefäßes 3 vorgesehen. Das Heizmittel 10 ist dabei vorzugsweise durch ein Anschlussmittel 14 mit einer Steuereinheit 54 verbunden, sodass eine Temperatur innerhalb des Kochgefäßes 3 regelbar ist. Ferner weist das Heizelement 1 eine Öffnung 27 auf, durch welche ein Antriebsmittel 51 eines Rührwerkes 50 geführt ist, wobei an dem Antriebsmittel 51 innerhalb des Kochgefäßes 3 Rührmittel 53 angeordnet sind, die durch einen Antrieb 52, welcher mit dem Antriebsmittel 51 in Wirkverbindung steht, angetrieben werden können. Durch eine derartige Ausführung können Lebensmittel innerhalb des Kochgefäßes 3 besonders zuverlässig erhitzt werden, sodass beispielsweise ein Garpunkt eines bestimmten Lebensmittels genau getroffen werden kann. Insbesondere kann das dargestellte Heizelement 1 ein Heizelement gemäß dem ersten Ausführungsbeispiel oder eines der weiteren Ausführungsbeispiele, insbesondere der Figuren 3 oder 4, sein.

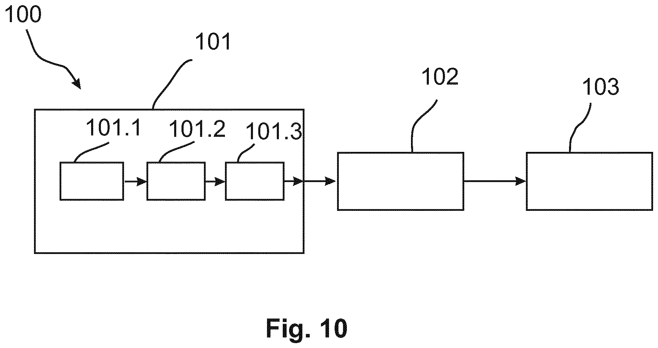

Fig. 9 zeigt ein Verbinden von Formbereichen 201.1, 202.1, 203.1 unterschiedlicher Platten eines erfindungsgemäßen Verfahrens 100 in einem weiteren Ausführungsbeispiel. Dabei werden eine erste Funktionsplatte 201, eine zweite Funktionsplatte 202 und eine metallische Wärmeleitplatte 203 miteinander verbunden. Das Verbinden kann zumindest teilweise oder vollständig vollflächig oder in den Formbereichen 201.1, 202.1, 203.1 erfolgen. Dabei können die erste und zweite Funktionsplatte 201, 202 mit der Wärmeleitplatte 203 vorzugsweise sandwichartig verpresst werden, sodass die Wärmeleitplatte 203 zwischen der ersten und zweiten Funktionsplatte 201, 202 angeordnet ist. Bei dem Verpressen kann sich eine Plattendicke der ersten und zweiten Funktionsplatte 201, 202 und der Wärmeleitplatte 203 ändern, sodass sich die Oberfläche der Platten vergrößert und die Verbindung besonders sicher gewährleistet ist. Dabei kann ferner auch ein Erhitzen vorgesehen sein, welches gleichzeitig oder nach dem Verpressen erfolgt, um einen entsprechenden Verbund der Platten 201, 202, 203 zu gewährleisten. Vorzugsweise kann das Verfahren 100 des Ausführungsbeispiels aus Figur 9 ein Teil des Verfahrens des Ausführungsbeispiels der nachfolgenden Figur 10 sein.

Fig. 10 zeigt ferner ein erfindungsgemäßes Verfahren 100 zur Herstellung eines Heizelementes 1 für ein Kochgefäß 3 in schematischer Darstellung der Verfahrensschritte. Dabei kann vorzugsweise in einem ersten Verfahrensschritt 101 vorgesehen sein, dass ein Wärmeübertrager 20 bereitgestellt wird. Im Rahmen des Schrittes 101 ist ferner insbesondere vorgesehen, dass weitere Schritte ausgeführt werden. Dabei ist in einem Verfahrensschritt 101.1 zum einen vorgesehen, dass eine metallische Wärmeleitplatte 203 und eine erste Funktionsplatte 201 sowie eine zweite Funktionsplatte 202 bereitgestellt werden. Dabei weisen die Wärmeleitplatte 203 und die erste Funktionsplatte 201 sowie die zweite Funktionsplatte 202 jeweils einen der Formbereiche 201.1, 202.1, 203.1 auf. Daraufhin kann ein Verbinden der Formbereiche 201.1, 203.1, 202.1 im Rahmen eines Schrittes 101.2 erfolgen, wodurch eine Wärmeleitschicht 23 und zumindest eine erste Funktionsschicht 21 entsteht, sodass Wärme von der Wärmeleitschicht 23 flächig an die erste Funktionsschicht 21 übertragbar ist. Vor oder nach dem Schritt 101.2 kann ferner vorgesehen sein, dass ein weiterer Verfahrensschritt 101.3 ausgeführt wird, der ein Heraustrennen der Formbereiche 201.1, 202.1, 203.1 aus der Wärmeleitplatte 203 und der ersten und/oder zweiten Funktionsplatte 201, 202 umfasst. Vorzugsweise kann das Heraustrennen der Formbereiche 201.1, 202.1, 203.1 dabei gleichzeitig vorgesehen sein. In einem weiteren Verfahrensschritt 102 ist ferner ein Anordnen eines Heizmittels 10 mit dem Wärmeübertrager 20 vorgesehen, wobei beispielsweise das Heizmittel 10 mittels Siebdruck am Wärmeübertrager 20, insbesondere an einer Wärmeaufnahmeseite 20.1 des Wärmeübertragers 20, aufgedruckt werden kann. Vorzugsweise kann ferner eine insbesondere mittig des Wärmeübertragers 20 angeordnete Öffnung 27 vorgesehen werden. Das Vorsehen der Öffnung 27 kann vorteilhafterweise vor, nach und/oder gleichzeitig mit dem Heraustrennen der Formbereiche 201.1, 202.1, 203.1 aus der Wärmeleitplatte 203 und der ersten und/oder zweiten Funktionsplatte 201, 202 erfolgen. Insbesondere kann zum Herstellen der Öffnung 27 ein Materialbereich innerhalb der Formbereiche 201.1, 202.1, 203.1 aus der Wärmeleitplatte 203 und der ersten und/oder zweiten Funktionsplatte 201, 202 herausgetrennt werden. Insbesondere kann ferner ein weiterer Verfahrensschritt 103 vorgesehen sein, der ein Anbringen von zumindest einem Sensorelement 15, 16 umfasst, welches zusammen mit dem Heizmittel 10 an einer Wärmeaufnahmeseite 20.1 des Wärmeübertragers 20 aufgedruckt werden kann. Dadurch ergibt sich ein einfaches, kostengünstiges Verfahren, um das Heizelement 1 herzustellen, welches eine gleichmäßige Wärmeverteilung über die gesamte Bodenfläche des Kochgefäßes 3 einer Küchenmaschine 2 gewährleisten kann. Insbesondere kann durch das dargestellte Verfahren 100 ein Heizelement gemäß einem der Ausführungsbeispiele nach den Figuren 1 bis 8 gefertigt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 1: Heizelement
- 1.1: Gesamtdicke von 10 und 20
- 2: Küchenmaschine
- 3: Kochgefäß
- 3.1: Einfüllöffnung

- 10: Heizmittel
- 11: Dielektrikum
- 12: erstes Widerstandselement
- 13: zweites Widerstandselement
- 14: Anschlussmittel
- 15: erstes Sensorelement
- 16: zweites Sensorelement

- 20: Wärmeübertrager
- 20.1: Wärmeaufnahmeseite
- 20.2: Wärmeabgabeseite
- 20.3: max. Durchmesser
- 20.4: Übertragungsdicke
- 21: erste Funktionsschicht
- 21.1: Schichtdicke von 21
- 22: zweite Funktionsschicht
- 22.1: Schichtdicke von 22
- 23: Wärmeleitschicht
- 23.1: Schichtdicke von 23
- 24: Zusatzschicht
- 25: Befestigungsstelle
- 26.1: Abstand zwischen 21 und 23
- 26.2: Abstand zwischen 22 und 23
- 27: Öffnung
- 28: Schweißnaht
- 29: Dichtung

- 50: Rührwerk
- 51: Antriebsmittel
- 52: Antrieb
- 53: Rührmittel
- 54: Steuereinheit

- 100: Verfahren
- 101: Verfahrensschritt
- 101.1: Verfahrensschritt
- 101.2: Verfahrensschritt
- 101.3: Verfahrensschritt
- 102: Verfahrensschritt
- 103: Verfahrensschritt

- 201: erste Funktionsplatte
- 201.1: Formbereich von 201
- 202: zweite Funktionsplatte
- 202.1: Formbereich von 202
- 203: Wärmeleitplatte
- 203.1: Formbereich von 203

## Patentansprüche

1. Kochgefäß (3) für eine Küchenmaschine (2) mit einem Heizelement (1), wobei das Heizelement (1)
ein Heizmittel (10) zum Erzeugen von Wärme, und
einen Wärmeübertrager (20) mit einer Wärmeaufnahmeseite (20.1), an welcher der Wärmeübertrager (20) durch das Heizmittel (10) erwärmbar ist, und einer Wärmeabgabeseite (20.2) zum Erhitzen von Lebensmitteln in der Küchenmaschine (2) aufweist,
wobei der Wärmeübertrager (20) eine Öffnung (27) für ein Rührwerk (50) und an der Wärmeabgabeseite (20.2) eine erste Funktionsschicht (21) aufweist,
**dadurch gekennzeichnet,**
**dass** der Wärmeübertrager (20) zumindest bereichsweise eine metallische Wärmeleitschicht (23) aufweist, die derart mit der ersten Funktionsschicht (21) angeordnet ist, dass die vom Heizmittel (10) erzeugte Wärme von der Wärmeleitschicht (23) flächig an die erste Funktionsschicht (21) übertragbar ist, wobei die Wärmeleitschicht (23) zwischen der ersten Funktionsschicht (21) und einer zweiten Funktionsschicht (22) angeordnet ist, wobei der Wärmeüberträger (20) eine metallische Wärmeleitplatte (203), mindestens eine erste Funktionsplatte (201) sowie eine zweite Funktionsplatte (202) aufweist, die jeweils mindestens einen Formbereich (201.1, 203.1) aufweisen, wobei die Formbereiche (201.1, 202.1, 203.1) durch ein Verpressen der Formbereiche miteinander verbunden sind, wobei eine Dicke der Formbereiche abnimmt, wobei eine Öffnung (27) im Wärmeüberträger (20) vorgesehen ist.

2. Kochgefäß (3) nach Anspruch 1,
**dadurch gekennzeichnet,**
**dass** die erste und/oder die zweite Funktionsschicht (21, 22) lebensmittelecht ausgebildet ist, insbesondere wobei die erste und/oder zweite Funktionsschicht (21, 22) einen Edelstahl aufweist oder aus einem Edelstahl besteht.

3. Kochgefäß (3) nach einem der vorhergehenden Ansprüche,
**dadurch gekennzeichnet,**
**dass** die Öffnung (27) mittig des Wärmeübertragers (20) angeordnet ist und/oder dass der Wärmeübertrager (20) kreisscheibenartig ausgestaltet ist.

4. Kochgefäß (3) nach einem der vorhergehenden Ansprüche,
**dadurch gekennzeichnet,**
**dass** eine Schichtdicke (21.1) der ersten Funktionsschicht (21) zwischen 30% und 70%, vorzugsweise 40% bis 60%, besonders bevorzugt ungefähr 50%, einer Schichtdicke (23.1) der Wärmeleitschicht (23) entspricht.

5. Kochgefäß (3) nach einem der vorhergehenden Ansprüche,
**dadurch gekennzeichnet,**
**dass** das Heizmittel (10) eine Heizschicht ist, die an der Wärmeleitschicht (23) oder an der zweiten Funktionsschicht (22) direkt angeordnet ist.

6. Kochgefäß (3) nach einem der vorhergehenden Ansprüche,
**dadurch gekennzeichnet,**
**dass** das Heizmittel (10) zumindest ein erstes Widerstandselement (12) aufweist, das zum Erzeugen von Wärme kabelgebunden und/oder induktiv bestrombar ist, insbesondere wobei an dem ersten Widerstandselement (12) mindestens abschnittsweise ein Dielektrikum (11) angeordnet ist.

7. Kochgefäß (3) nach einem der vorhergehenden Ansprüche,
**dadurch gekennzeichnet,**
**dass** am Wärmeübertrager (20) zumindest ein erstes Sensorelement (15), insbesondere zum Erfassen einer Temperatur, angeordnet ist.

8. Küchenmaschine (2) mit einem Kochgefäß (3) und einem Antrieb (52) für ein Rührwerk (50),
**dadurch gekennzeichnet,**
**dass** das Kochgefäß (3) nach einem der vorhergehenden Ansprüche ausgestaltet ist.

9. Verfahren (100) zur Herstellung eines Heizelementes (1) für ein Kochgefäß (3), nach einem der Ansprüche 1 bis 7, für eine Küchenmaschine (2), nach Anspruch 8, aufweisend die folgenden Schritte:
a) Bereitstellen eines Wärmeübertragers (20), aufweisend die folgende Schritte:
- Bereitstellen einer metallischen Wärmeleitplatte (203), mindestens einer ersten Funktionsplatte (201) und einer zweiten Funktionsplatte (202), wobei die Wärmeleitplatte (203), die erste Funktionsplatte (201) und die zweite Funktionsleitplatte (202) jeweils mindestens einen Formbereich (201.1, 203.1) aufweisen,
- Verbinden zumindest des Formbereiches (203.1) der Wärmeleitplatte (203) mit dem Formbereich (201.1) der ersten Funktionsplatte (201) und mit dem Formbereich (202.1) der zweiten Funktionsplatte (202), so dass eine zweite Funktionsschicht (22) des Wärmeüberträgers (20) gebildet wird, wobei der Formbereich (203.1) der Wärmeleitplatte (203) sandwichartig zwischen den Formbereichen (201.1, 202.1) der ersten und zweiten Funktionsplatte (201, 202) angeordnet wird, wodurch eine Wärmeleitschicht (23) und zumindest eine erste Funktionsschicht (21) mit einer Wärmeabgabeseite (20.2) entsteht, so dass Wärme von der Wärmeleitschicht (23) flächig an die erste Funktionsschicht (21) übertragbar ist,
- Vorsehen einer Öffnung (27) im Wärmeüberträger (20),
b) Anordnen eines Heizmittels (10) am Wärmeübertrager (20),
wobei das Verbinden der Formbereiche (201.1, 202.1, 203.1) ein Verpressen der Formbereiche (201.1, 202.1, 203.1) umfasst, wobei eine Dicke der Formbereiche (201.1, 202.1, 203.1) abnimmt.

10. Verfahren (100) nach Anspruch 9,
**dadurch gekennzeichnet,**
**dass** das Bereitstellen des Wärmeübertragers (20) gemäß Schritt a) ferner folgenden Schritt umfasst:
- Heraustrennen der Formbereiche (201.1, 202.1, 203.1) aus der Wärmeleitplatte (203) und der ersten und/oder der zweiten Funktionsplatte (201, 202), insbesondere wobei das Heraustrennen der Formbereiche (201.1, 202.1, 203.1) aus der Wärmeleitplatte (203) und einer der Funktionsplatten (201, 202) oder beider Funktionsplatten (201, 202) gleichzeitig vorgesehen ist.

11. Verfahren (100) nach einem der Ansprüche 9 bis 10,
**dadurch gekennzeichnet,**
**dass** das Anordnen des Heizmittels (10) am Wärmeübertrager (20) ein Aufdrucken einer Heizschicht, insbesondere durch Siebdruck, auf den Wärmeübertrager (20) umfasst.

## Claims

1. Cooking vessel (3) for a food processor (2) comprising a heating element (1), wherein the heating element (1) comprises
a heating means (10) for generating heat, and
a heat exchanger (20) having a heat receiving side (20.1), at which the heat exchanger (20) can be heated by the heating means (10), and a heat delivery side (20.2) for heating food in the food processor (2),
wherein the heat exchanger (20) comprises an opening (27) for an agitator (50) and a first functional layer (21) on the heat delivery side (20.2),
**characterized in that,**
the heat exchanger (20) comprises, at least in regions, a metallic heat-conducting layer (23) which is arranged with the first functional layer (21) in such a way that the heat generated by the heating means (10) can be transferred from the heat-conducting layer (23) to the first functional layer (21) essentially over a surface area, wherein the heat conducting layer (23) is arranged between the first functional layer (21) and a second functional layer (22), wherein the heat exchanger (20) comprises a metallic heat conducting plate (203), at least one first functional plate (201) and a second functional plate (202), each of which comprises at least one shaped region (201.1, 202.1, 203.1), wherein the shaped regions (201.1, 202.1, 203.1) are connected to one another by pressing the shaped regions together, wherein a thickness of the shaped regions decreases, wherein an opening (27) is provided in the heat exchanger (20).

2. Cooking vessel (3) according to claim 1,
**characterized in that,**
the first and/or the second functional layer (21, 22) is designed to be food-safe, in particular wherein the first and/or second functional layer (21, 22) comprises a stainless steel or consists of a stainless steel.

3. Cooking vessel (3) according to one of the preceding claims,
**characterized in that,**
the opening (27) is essentially arranged in the centre of the heat exchanger (20) and/or **in that** the heat exchanger (20) is designed in the form of a circular disc.

4. Cooking vessel (3) according to one of the preceding claims,
**characterized in that,**
a layer thickness (21.1) of the first functional layer (21) of between 30% and 70%, preferably 40% to 60%, particularly preferably approximately 50%, corresponds to a layer thickness (23.1) of the heat-conducting layer (23).

5. Cooking vessel (3) according to one of the preceding claims,
**characterized in that,**
the heating means (10) is a heating layer which is arranged directly on the heat conducting layer (23) or on the second functional layer (22).

6. Cooking vessel (3) according to one of the preceding claims,
**characterized in that,**
the heating means (10) has at least one first resistance element (12) which can be supplied with current by cable and/or inductively in order to generate heat, in particular with a dielectric (11) being arranged at least in sections on the first resistance element (12).

7. Cooking vessel (3) according to one of the preceding claims,
**characterized in that,**
at least one first sensor element (15), in particular for detecting a temperature, is arranged on the heat exchanger (20).

8. Food processor (2) with a cooking vessel (3) and a drive (52) for an agitator (50),
**characterized in that,**
the cooking vessel (3) is designed according to one of the preceding claims.

9. A method (100) for manufacturing a heating element (1) for a cooking vessel (3), according to one of claims 1 to 7, for a food processor (2), according to claim 8, comprising the following steps:
a) providing a heat exchanger (20), comprising the following steps:
- provision of a metallic heat conducting plate (203), at least a first functional plate (201) and a second functional plate (202), wherein the heat conducting plate (203), the first functional plate (201) and the second functional plate (202) each have at least one shaped region (201.1, 202.1, 203.1),
- connecting at least the shaped region (203.1) of the heat conducting plate (203) to the shaped region (201.1) of the first functional plate (201) and to the shaped region (202.1) of the second functional plate (202), so that a second functional layer (22) of the heat exchanger (20) is formed, wherein the shaped region (203.1) of the heat conducting plate (203) is arranged in a sandwich-like manner between the shaped regions (201.1, 202.1) of the first and second functional plate (201, 202), whereby a heat conducting layer (23) and at least one first functional layer (21) with a heat delivery side (20.2) is formed, so that heat can be transferred from the heat conducting layer (23) in a planar manner to the first functional layer (21),
- provision of an opening (27) in the heat exchanger (20),
b) arrangement of a heating means (10) on the heat exchanger (20),
wherein connecting the shaped regions (201.1, 202.1, 203.1) comprises pressing the shaped regions (201.1, 202.1, 203.1), wherein a thickness of the shaped regions (201.1, 202.1, 203.1) decreases.

10. Method (100) according to claim 9,
**characterized in that,**
the provision of the heat exchanger (20) according to step a) further comprises the following step:
- separation of the shaped regions (201.1, 202.1, 203.1) from the heat conducting plate (203) and the first and/or the second functional plate (201, 202), in particular wherein the separation of the shaped regions (201.1, 202.1, 203.1) from the heat conducting plate (203) and one of the functional plates (201, 202) or both functional plates (201, 202) is provided simultaneously.

11. Method (100) according to one of claims 9 to 10,
**characterized in that,**
the arrangement of the heating means (10) on the heat exchanger (20) comprises printing a heating layer, in particular by screen printing, on the heat exchanger (20).

## Revendications

1. Récipient de cuisson (3) pour un robot de cuisine (2) avec un élément chauffant (1), dans lequel l'élément chauffant (1) comprend
un moyen de chauffage (10) pour produire de la chaleur, et
un échangeur de chaleur (20) ayant un côté de réception de la chaleur (20.1), sur lequel l'échangeur de chaleur (20) peut être chauffé par le moyen de chauffage (10), et un côté d'émission de chaleur (20.2) pour chauffer les aliments dans le robot de cuisine (2), dans lequel l'échangeur de chaleur (20) présente une ouverture (27) pour un agitateur (50) et une première couche fonctionnelle (21) sur le côté d'émission de chaleur (20.2), **caractérisé**
**en ce que** l'échangeur de chaleur (20) présente au moins par endroits une couche métallique conductrice de chaleur (23) qui est disposée avec la première couche fonctionnelle (21) de telle sorte que la chaleur produite par le moyen de chauffage (10) peut être transférée sur une surface de la couche conductrice de chaleur (23) à la première couche fonctionnelle (21), dans lequel la couche conductrice de chaleur (23) est disposée entre la première couche fonctionnelle (21) et une deuxième couche fonctionnelle (22), dans lequel l'échangeur de chaleur (20) comprend une plaque conductrice de chaleur métallique (203), au moins une première plaque fonctionnelle (201) et une deuxième plaque fonctionnelle (202), dont chacune présente au moins une zone de moule (201.1, 202.1, 203.1), les zones de moule (201.1, 202.1, 203.1) étant reliées entre elles par compression des zones de moule, une épaisseur des zones de moule diminuant, une ouverture (27) étant prévue dans l'échangeur de chaleur (20).

2. Récipient de cuisson (3) selon la revendication 1,
**caractérisé**
**en ce que** la première et/ou la deuxième couche fonctionnelle (21, 22) est conçue pour être sûre pour les aliments, en particulier en ce que la première et/ou la deuxième couche fonctionnelle (21, 22) comprend un acier inoxydable ou consiste en un acier inoxydable.

3. Récipient de cuisson (3) selon l'une des revendications précédentes,
**caractérisé**
**en ce que** l'ouverture (27) est disposée au centre de l'échangeur de chaleur (20) et/ou en ce que l'échangeur de chaleur (20) est conçu sous la forme d'un disque circulaire.

4. Récipient de cuisson (3) selon l'une des revendications précédentes,
**caractérisé**
**en ce qu'**une épaisseur de couche (21.1) de la première couche fonctionnelle (21) comprise entre 30 % et 70 %, de préférence entre 40 % et 60 %, et surtout de préférence environ 50 %, correspond à une épaisseur de couche (23.1) de la couche conductrice de chaleur (23).

5. Récipient de cuisson (3) selon l'une des revendications précédentes,
**caractérisé**
**en ce que** le moyen de chauffage (10) est une couche chauffante qui est disposée directement sur la couche conductrice de chaleur (23) ou sur la deuxième couche fonctionnelle (22).

6. Récipient de cuisson (3) selon l'une des revendications précédentes,
**caractérisé**
**en ce que** le moyen de chauffage (10) présente au moins un premier élément de résistance (12) qui peut être alimenté en courant par câble et/ou par induction afin de générer de la chaleur, un diélectrique (11) étant notamment disposé au moins par sections sur le premier élément de résistance (12).

7. Récipient de cuisson (3) selon l'une des revendications précédentes,
**caractérisé**
**en ce qu'**au moins un premier élément de capteur (15), notamment pour la détection d'une température, est disposé sur l'échangeur de chaleur (20).

8. Robot de cuisine (2) avec un récipient de cuisson (3) et un entraînement (52) pour un agitateur (50),
**caractérisé**
**en ce que** le récipient de cuisson (3) est conçu selon l'une des revendications précédentes.

9. Procédé (100) de fabrication d'un élément chauffant (1) pour un récipient de cuisson (3), selon l'une des revendications 1 à 7, pour un robot ménager (2), selon la revendication 8, comprenant les étapes suivantes :
a) fourniture d'un échangeur de chaleur (20), comprenant les étapes suivantes :
- mise à disposition d'une plaque métallique conductrice de chaleur (203), d'au moins une première plaque fonctionnelle (201) et une deuxième plaque fonctionnelle (202), la plaque conductrice de chaleur (203), la première plaque fonctionnelle (201) et la deuxième plaque fonctionnelle (202) présentant chacune au moins une zone de moule (201.1, 203.1),
- raccordement d'au moins la zone de moule (203.1) de la plaque conductrice de chaleur (203) à la zone de moule (201.1) de la première plaque fonctionnelle (201) et à la zone de moule (202.1) de la deuxième plaque fonctionnelle (202), de sorte qu'une deuxième couche fonctionnelle (22) de l'échangeur de chaleur (20) est formée, la zone de moule (203.1) de la plaque conductrice de chaleur (203) est disposée en sandwich entre les zones de moule (201.1, 202.1) de la première et de la deuxième plaque fonctionnelle (201, 202), une couche conductrice de chaleur (23) et au moins une première couche fonctionnelle (21) avec une côté d'émission de chaleur (20.2) étant formées, de sorte que la chaleur peut être transmise de manière plane de la couche conductrice de chaleur (23) à la première couche fonctionnelle (21),
- prévision d'une ouverture (27) dans l'échangeur de chaleur (20),
b) disposition d'un moyen de chauffage (10) sur l'échangeur de chaleur (20),
dans lequel le raccordement des zones de moule (201.1, 202.1, 203.1) comprend le pressage des zones de moule (201.1, 202.1, 203.1), dans lequel une épaisseur des zones de moule (201.1, 202.1, 203.1) diminue.

10. Procédé (100) selon la revendication 9,
**caractérisé**
**en ce que** la fourniture de l'échangeur de chaleur (20) selon l'étape a) comprend en outre l'étape suivante :
- séparation des zones de moule (201.1, 202.1, 203.1) de la plaque conductrice de chaleur (203) et de la première et/ou de la deuxième plaque fonctionnelle (201, 202), en particulier dans laquelle la séparation des zones de moule (201.1, 202.1, 203.1) de la plaque conductrice de chaleur (203) et de l'une des plaques fonctionnelles (201, 202) ou des deux plaques fonctionnelles (201, 202) est prévue simultanément.

11. Procédé (100) selon l'une des revendications 9 à 10,
**caractérisé**
**en ce que** la disposition des moyens de chauffage (10) sur l'échangeur de chaleur (20) comprend l'impression d'une couche chauffante, notamment par sérigraphie, sur l'échangeur de chaleur (20).
